# EUROPÄISCHE PATENTSCHRIFT

(11) **EP 2 778 219 B1**
(45) Veröffentlichungstag und Bekanntmachung des Hinweises auf die Patenterteilung: **13.11.2019**
(21) Anmeldenummer: 14157851.8
(22) Anmeldetag: 05.03.2014
(51) Int. Cl.: C12C 7/22, C12C 7/26

(54) **Verfahren und Sudhausanlage zur kontinuierlichen Würzeherstellung**
Method and brewhouse plant for the continuous production of wort
Procédé et installation de brassage pour la fabrication en continu du moût

(30) Priorität: 13.03.2013 DE 102013004280; 07.10.2013 DE 102013111058; 19.02.2014 DE 102014102085
(43) Veröffentlichungstag der Anmeldung: 17.09.2014
(73) Patentinhaber: GEA BREWERY SYSTEMS GMBH, 97318 Kitzingen (DE)
(72) Erfinder: Michel, Rudolf, Dr., 96049 Bamberg (DE)
(74) Vertreter: advotec.

(56) Entgegenhaltungen:
- WO-A1-2011/076410
- WO-A1-2014/040972
- DE-A1- 3 513 811
- DE-A1- 10 139 427
- DE-A1-102010 042 765
- DE-U1-202011 110 180
- ZACHARIAS P: "Abnahmemessungen an Würzekühlern. Ergebnisse, Mängel, Richtwerte, Folgerungen für die Praxis", BRAUWELT, NUERNBERG, DE, Bd. 137, Nr. 42, 1. Januar 1997 (1997-01-01), Seiten 1936-1943, XP008136190, ISSN: 0724-696X
- DEWULF A ET AL: "A GLOBAL CONCEPT OF WORT PRODUCTION WITH REDUCED CONSUMPTION OF ENERGY AND PROCESS WATER", EUROPEAN BREWERY CONVENTION: PROCEEDINGS OF THE CONGRESS,INTERNATIONAL CONGRESS PROCEEDINGS, XX, XX, no. 34Th, 26 May 2013 (2013-05-26), page 1, XP003036003,

## Beschreibung

Die Erfindung betrifft ein Verfahren und eine Sudhausanlage zur kontinuierlichen Würzeherstellung gemäß der Oberbegriffe der unabhängigen Hauptansprüche.

In klassischen Sudhausanlagen erfolgt die Würzezubereitung im Batch-Betrieb. Dies bedeutet mit anderen Worten, dass die Würze nacheinander verschiedene Behälter zum Maischen incl. Maischekochung, zur Abläuterung, zur Würzekochung und zur Trubabtrennung durchläuft. Die Kapazität solcher Anlagen wird durch die Kapazität des Gefäßes mit dem geringsten Durchlauf bestimmt. Der Betrieb von Sudhausanlagen im Batch-Betrieb hat außerdem Nachteile hinsichtlich des Energiebedarfs, da der Batch-Betrieb zu Bedarfsspitzen führt. Die gesamte Anlage zur Energie- und Wasserversorgung muss in ihrer Kapazität dann auf diese Bedarfsspitzen abgestimmt werden, was zu hohen Kosten führt.

Zur Vermeidung dieser Nachteile von klassischen Sudhausanlagen mit Batch-Betrieb sind Sudhausanlagen bekannt, in denen die Würzeherstellung kontinuierlich im Durchlauf erfolgen kann. Dies bedeutet mit anderen Worten, dass die Würze dabei nicht mehr nacheinander abschnittsweise einzelne Gefäße durchläuft. Vielmehr durchläuft der Maische- und Würzestrom kontinuierlich die unterschiedlichen Apparate und Vorrichtungen des Sudhauses. Die Rohstoffe müssen dabei kontinuierlich nachgefördert werden. Das fertige Produkt, nämlich die Würze, wird kontinuierlich oder quasi kontinuierlich ausgestoßen.

Ein Verfahren und eine Sudhausanlage zur kontinuierlichen Würzeherstellung sind beispielsweise aus der DE 3614431 A1 bekannt. Bei dieser Vorrichtung wird die in zwei Entspannungsgefäßen anfallende Restwärme zurückgewonnen und zur Vorwärmung der kontinuierlich zu kochenden Würze genutzt.

Aus der WO 2011/076410 A1 ist eine Sudhausanlage bekannt, bei der zur Würzekühlung zwei hintereinander angeordnete Plattenwärmetauscher vorgesehen sind. Die erste Stufe der Würzekühlung im ersten Plattenwärmetauscher erfolgt dabei unter Einsatz von Wasser aus einem Energiespeichertank, das durch den Wärmeübergang im ersten Plattenwärmetauscher erhitzt und anschließend zurück in den Energiespeichertank gepumpt wird. Die im ersten Plattenwärmetauscher durch den Wärmeübergang auf das Wasser aus dem Energiespeichertank bereits um circa 15 bis 20 Grad Celsius abgekühlte Würze wird danach im zweiten Plattenwärmetauscher auf die gewünschte Anstelltemperatur für den Gärkeller von circa 8 bis 12 Grad Celsius abgekühlt. Die Kühlung im zweiten Plattenwärmetauscher erfolgt dabei durch Wärmeübergang auf Kaltwasser. Das Kaltwasser wird dabei von einer Kaltwassertemperatur von circa 3 bis 12 Grad Celsius auf eine Speichertemperatur von 80 Grad Celsius erwärmt und in einem zweiten Energiespeichertank zwischengespeichert.

In dem Aufsatz von A. DEWULF, "MEURASTERAM: A GLOBAL CONCEPT OF WORT PRODUCTION WITH REDUCED CONSUMPTION OF ENERGY AND PROCESS WATER", wird auf Seite 1 eine Sudhausanlage zur kontinuierlichen Würzeherstellung dargestellt, bei der zwischen dem Würzekühler einerseits und der Würzevorheizeinrichtung andererseits zwei Aggregate vorgesehen sind. Bei diesen beiden Aggregaten handelt es sich zum einen um einen Wärmetauscher, in dem das im Würzekühler erhitzte Prozesswasser weiter auf 99° C erhitzt wird und um einen Heißwasserspeichertank.

Diese Sudhausanlage weist den Nachteil auf, dass sie kein wirklich kontinuierliches Verfahren zur Würzekochung ermöglicht, da nämlich das im Würzekühler erhitzte Prozesswasser in einem zusätzlich vorzusehenden Zwischenspeichertank zwischengespeichert werden muss. Diese Zwischenspeicherung in einem Zwischenspeichertank hat neben dem Nachteil des zusätzlichen gerätetechnischen Aufwands für den Bau des Zwischenspeichertanks auch technologische Nachteile im Hinblick auf die Energienutzung. Denn im Zwischenspeichertank stellt sich bei der Zwischenspeicherung des im Würzekühler erhitzten Heißwassers eine Mischtemperatur ein, so dass die Spitzentemperaturen des Heißwassers nicht optimal genutzt werden können. Um diesen Nachteil auszugleichen sieht die Anlage gemäß Druckschrift D8 einen zusätzlichen Wärmetauscher vor, mit dem das Prozesswasser nach der Erhitzung im Würzekühler einheitlich auf ein Temperaturniveau von 99° C angehoben wird. Erst dadurch, dass das Prozesswasser unter Nutzung von Frischenergie, nämlich Dampf, auf ein einheitliches Temperaturniveau von 99° C angehoben wird, können die Nachteile der Einstellung einer Mischtemperatur im nachgeordneten Heißwasserspeichertank vermieden werden. Dadurch wird allerdings die zusätzliche Einrichtung eines Wärmetauschers zwischen Würzekühler einerseits und Heißwasserspeichertank andererseits erforderlich. Außerdem wird die Energieeffizienz durch diese Lösung verschlechtert, da für die Anhebung des Temperaturniveaus auf einheitlich 99° C Frischenergie verwendet werden muss. Außerdem werden durch den Heißwasserspeichertank gemäß Druckschrift D8 nicht unerhebliche Energieverluste aufgrund der Wärmeabstrahlung des Heißwasserspeichertanks verursacht. Diese Energieverluste sind im Vergleich zu anderen Speichergefäßen besonders hoch, da das Heißwasser im Heißwasserspeichertank eine sehr hohe Temperatur nahe dem Siedepunkt aufweist.

Aufgabe der vorliegenden Erfindung ist es, ein Verfahren und eine Sudhausanlage zur kontinuierlichen Würzeherstellung vorzuschlagen, die im Hinblick auf den Energiebedarf im Vergleich zum vorbekannten Stand der Technik weiter verbessert ist.

Diese Aufgabe wird durch ein Verfahren und eine Sudhausanlage nach der Lehre der unabhängigen Hauptansprüche gelöst.

Vorteilhafte Ausführungsformen der Erfindung sind Gegenstand der Unteransprüche.

Das erfindungsgemäße Verfahren ist zunächst einmal gattungsgemäß dahingehend charakterisiert, dass die Würze nach der Würzekochung und vor der Zugabe von Hefe in einem kontinuierlich arbeitenden Würzekühler von der Heißwürzetemperatur auf die gewünschte Anstelltemperatur abgekühlt wird. Zur Kühlung des kontinuierlich arbeitenden Würzekühlers wird dabei Wasser eingesetzt, das den Würzekühler im Gegenstrom durchströmt. Der Würzekühler ist dabei in der Art eines Wärmeübertragers ausgebildet, so dass die in der Würze enthaltene Wärme auf das Wasser übertragen werden kann. Das Wasser wird auf diese Weise von der Kaltwassertemperatur auf eine Zwischentemperatur erhitzt.

Um die so gewonnene Wärme, die von der kontinuierlich gekochten Würze auf das Wasser übertragen wurde, nutzen zu können, wird der eigentlichen Würzekocheinrichtung eine Würzevorheizeinrichtung vorgeschaltet. Das Wasser aus dem Würzekühler wird in die Würzevorheizeinrichtung eingeleitet und dient dort zur Anhebung der Temperatur der Würze vor der Einleitung in die Würzekochvorrichtung. Durch das Vorwärmen der Würze vor der eigentlichen Würzekochung kann ein bestimmter Anteil der zur Würzekochung erforderlichen Wärmeenergie eingespart werden.

Nachdem das Wasser in der Würzevorheizeinrichtung durch Wärmeübertragung abgekühlt ist, weist es üblicherweise immer noch eine durchaus hohe Temperatur von beispielsweise 80 °C auf. Wird dieses Wasser nach Durchlauf durch die Würzevorheizeinrichtung abgelassen, beispielsweise durch Einleitung in die Kanalisation, so ist ein hoher Energieanteil vergeudet. Um die im Wasser nach Durchlauf durch die Würzevorheizeinrichtung enthaltene Wärme noch nutzen zu können, ist es deshalb besonders vorteilhaft, wenn die Sudhausanlage zumindest einen Heißwassertank aufweist, aus dem unterschiedliche Wärmeverbraucher zur Wärmeversorgung mit Heißwasser versorgt werden können. Das Wasser aus der Würzevorheizeinrichtung kann dann in der Würzevorheizeinrichtung von der Zwischentemperatur auf die Heißwasserspeichertemperatur des Heißwassertanks abgekühlt und problemlos in den Heißwassertank eingeleitet werden. Im Ergebnis kann somit die im Wasser noch enthaltene Wärmeenergie nach Durchlauf durch die Würzevorheizeinrichtung im Heißwassertank abgespeichert und von dort auf andere Wärmeverbraucher verteilt werden.

Erfindungsgemäß wird das Wasser im Würzekühler von einer Kaltwassertemperatur im Bereich zwischen 2 °C und 6 °C auf eine Zwischentemperatur im Bereich zwischen 90 °C und 96 °C erhitzt.

Damit die kontinuierliche Würzezubereitung besonders effektiv erfolgen kann, ist es außerdem erfindungsgemäß vorgesehen, dass das Wasser in der kontinuierlich arbeitenden Würzevorheizeinrichtung von einer Zwischentemperatur im Bereich zwischen 90 °C und 96 °C auf eine Heißwasserspeichertemperatur im Bereich zwischen 75 °C und 85 °C heruntergekühlt wird. Dieses Wasser mit einer Temperatur im Bereich zwischen 75 °C und 85 °C kann dann problemlos in den Heißwasserspeicher eingeleitet werden, um die darin enthaltene Wärme für andere Wärmeverbraucher zur Verfügung zu stellen.

Mit welcher Temperaturspreizung der kontinuierlich arbeitende Würzekühler arbeitet, d. h. mit welcher Temperaturdifferenz das Wasser im Würzekühler erhitzt bzw. die Würze im Würzekühler abgekühlt wird, ist grundsätzlich beliebig. Gemäß einer bevorzugten Variante ist es vorgesehen, dass das Wasser im Würzekühler mit einer Temperaturspreizung im Bereich von 88 K bis 95 K erhitzt wird. Auch bei der Temperaturabsenkung der Würze im Würzekühler liegt die Temperaturspreizung vorteilhafterweise im Bereich von ca. 88 K bis 95 K.

Auch bei der Abkühlung der Würze im Würzekühler ist eine Temperaturspreizung im Bereich von 80 K bis 95 K besonders vorteilhaft. Insbesondere ist es gemäß einer bevorzugten Variante vorgesehen, dass die Würze im Würzekühler von einer Heißwürzetemperatur im Bereich zwischen 95 °C und 99 °C auf eine Anstelltemperatur im Bereich zwischen 5 °C und 20 °C, insbesondere auf eine Anstelltemperatur im Bereich zwischen 10 °C und 15 °C, abgekühlt wird.

Im Hinblick auf die Vermeidung von unnötigen Heißwasserüberschüssen sollte das Massenverhältnis zwischen der den Würzekühler durchströmenden Würze und dem den Würzekühler durchströmenden Wasser im Bereich zwischen 0,9 und 1,1, insbesondere ungefähr bei 1,0, liegen.

Um welches Maß die Würze in der kontinuierlich arbeitenden Würzevorheizeinrichtung vorgewärmt wird, hängt wiederum von den einzelnen Randbedingungen der kontinuierlichen Würzezubereitung ab. Eine besonders hohe Effektivität ergibt sich, wenn die Würze in der kontinuierlich arbeitenden Würzevorheizeinrichtung um eine Temperaturdifferenz im Bereich von 10 K bis 25 K erwärmt wird.

Gemäß einer bevorzugten Ausführungsform ist es vorgesehen, dass die Würze in der kontinuierlich arbeitenden Würzevorheizeinrichtung auf eine Temperatur über 85 °C, insbesondere auf eine Temperatur über 91 °C, erwärmt wird. Die erfindungsgemäße Sudhausanlage ist durch den kontinuierlichen Würzekühler charakterisiert, in dem die Würze auf Anstelltemperatur heruntergekühlt werden kann, wobei das Wasser dabei auf eine Zwischentemperatur erhitzt wird. Dieser kontinuierlich arbeitende Würzekühler ist mit der Würzevorheizeinrichtung verbunden, so dass das im Würzekühler erwärmte Wasser dazu dienen kann, die Würze vor der eigentlichen Würzekochung durch Wärmeübertragung zu erwärmen.

Besonders vorteilhaft ist es dabei, wenn neben dem kontinuierlich arbeitenden Würzekühler und der kontinuierlich arbeitenden Würzevorheizeinrichtung ein Heißwassertank vorhanden ist, in den das Wasser nach der Wärmeübertragung auf die Würze während des Durchlaufs durch diese Würzevorheizeinrichtung eingeleitet werden kann. In diesem Fall ist es dann notwendig, dass das Wasser in der Würzevorheizeinrichtung von der Zwischentemperatur, d. h. der Temperatur, die das Wasser nach Durchlauf durch den Würzekühler aufweist, auf die Heißwasserspeichertemperatur des Heißwassertanks heruntergekühlt wird.

Als Würzekühler bzw. als Würzevorheizeinrichtung können besonders vorteilhaft kontinuierlich arbeitende Plattenwärmeübertrager, insbesondere einstufig arbeitende Plattenwärmeübertrager, eingesetzt werden. Die Wärmeübertragung kann redundant ausgeführt werden, damit der kontinuierliche Prozess auch während der erforderlichen Reinigungsintervalle kontinuierlich fortgeführt werden kann.

Im Hinblick auf eine rationelle Würzezubereitung sollte der kontinuierlich arbeitenden Würzekocheinrichtung eine kontinuierlich arbeitende Vorrichtung zur Abtrennung von unerwünschten Aromastoffen, beispielsweise eine im Gegenstrom arbeitende Strippingvorrichtung, nachgeordnet sein.

Weiter sollte der Würzekocheinrichtung eine kontinuierlich arbeitende Vorrichtung zur Abtrennung des Heißtrubes nachgeordnet sein.

Eine Ausführungsform der Erfindung ist in den Zeichnungen schematisch gezeichnet und wird nachfolgend beispielhaft erläutert.

Es zeigt:

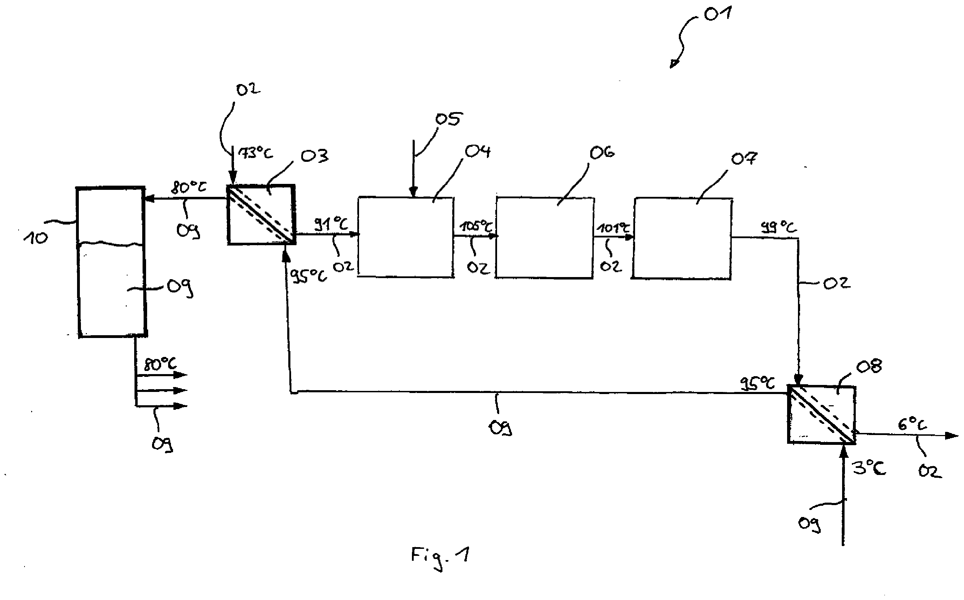

- Fig. 1: ein Prinzipschema einer Sudhausanlage zur kontinuierlichen Würzeherstellung gemäß dem erfindungsgemäßen Verfahren.

Fig. 1 zeigt eine Sudhausanlage 01 zur kontinuierlichen Würzezubereitung, wobei in Fig. 1 nur die Anlagenteile dargestellt sind, die zum Verständnis der Erfindung erforderlich sind.

Die abgeläuterte Würze 02 gelangt bei einer Temperatur von beispielsweise 73 °C in eine Würzevorheizeinrichtung 03, in der die Würze beim kontinuierlichen Durchlauf von 73 °C auf 91 °C erwärmt wird. Anschließend gelangt die Würze 02 in eine Würzekocheinrichtung 04, wo sie im kontinuierlichen Durchlauf von 91 °C auf 105 °C erhitzt wird, beispielsweise durch Zugabe von Dampf 05. Die Würze 02 wird anschließend mit einer Temperatur von 105 °C kontinuierlich in eine Vorrichtung 06 zur Abtrennung von unerwünschten Aromastoffen eingeleitet. Nach Durchlauf der Vorrichtung 06 weist die Würze 02 eine Temperatur von 101 °C auf und wird in eine kontinuierlich arbeitende Vorrichtung 07 zur Abtrennung von Heißtrub eingeleitet. Nach Durchlauf durch die Vorrichtung 07 gelangt die Würze mit einer Temperatur von ca. 99 °C in einen kontinuierlich arbeitenden Würzekühler 08. Im Würzekühler 08 wird die Würze 02 von 99 °C kontinuierlich auf eine Anstelltemperatur von beispielsweise 6 °C abgekühlt.

Zur Kühlung des Würzekühlers 08 dient Wasser 09, das beim Einströmen in den Würzekühler 08 beispielsweise eine Temperatur von 3 °C aufweist. Durch die Aufnahme der Wärme aus der Würze 02 wird das Wasser 09 im Würzekühler 08 auf 95 °C erwärmt. Das Wasser 09 wird dann aus dem Würzekühler 08 in die Würzevorheizeinrichtung 03 eingeleitet, wo die Würze 02 durch Wärmeübertragung vom Wasser 09 vorgewärmt wird. Durch die Wärmeübertragung wird das Wasser 09 in der Würzevorheizeinrichtung 03 von 95°C auf 80°C abgekühlt und dann mit dieser Temperatur in einem Heißwassertank 10 abgespeichert. Das Wasser 09 aus dem Heißwassertank 10 kann dann zur Wärmeversorgung anderer Wärmeverbraucher der Sudhausanlage 01 genutzt werden.

Durch die Erwärmung des Wassers 09 auf die Zwischentemperatur von 95 °C, die oberhalb der Heißwasserspeichertemperatur von 80 °C im Heißwassertank 10 liegt, wird das bei der Würzekühlung im Würzekühler 08 anfallende Heißwasser mengenmäßig reduziert, so dass unerwünschte Heißwasserüberschüsse, wie sie insbesondere in warmen Ländern anfallen, vermieden werden. Durch die Erwärmung des Wassers 09 im Würzekühler 08 auf die Zwischentemperatur von 95 °C ist außerdem die Übertragung von Wärme auf die Läuterwürze möglich, so dass die Würze vor dem Einlauf in die eigentliche Würzekochvorrichtung 04 auf 91 °C vorgewärmt werden kann.

## Patentansprüche

1. Verfahren zur kontinuierlichen Würzeherstellung in einer Sudhausanlage (01), wobei die Würze (02) der Würzekochung in einer kontinuierlich arbeitenden Würzekocheinrichtung (04) und vor der Zugabe von Hefe mit einem kontinuierlich arbeitenden Würzekühler (08) von einer Heißwürzetemperatur auf die gewünschte Anstelltemperatur abgekühlt wird, wobei der Würzekühler (08) in der Art eines Wärmeübertragers ausgebildet ist, mit dem die Würze (02) im Gegenstrom mit Wasser (09) gekühlt wird, wobei das Wasser (09) im Würzekühler (08) von einer Kaltwassertemperatur erwärmt wird,
**dadurch gekennzeichnet,**
**dass** das Wasser (09) im Würzekühler (08) kontinuierlich von einer Kaltwassertemperatur im Bereich zwischen 2 °C und 6 °C auf eine Zwischentemperatur im Bereich zwischen 90 °C und 96 °C erhitzt wird, wobei das die Zwischentemperatur im Bereich zwischen 90 °C und 96 °C aufweisende Wasser (09) anschließend unmittelbar als Wärmeträger in eine der Würzekocheinrichtung (04) vorgeordnete, kontinuierlich arbeitende Würzevorheizeinrichtung (03) eingeleitet wird,und wobei die Temperatur der Würze (02) in der Würzevorheizeinrichtung (03) durch Wärmeübertragung angehoben wird, und wobei
das Wasser (09) in der kontinuierlich arbeitenden Würzevorheizeinrichtung (03) von der im Würzekühler (08) erreichten Zwischentemperatur im Bereich zwischen 90 °C und 96 °C auf eine Heißwasserspeichertemperatur im Bereich zwischen 75 °C und 85 °C heruntergekühlt wird.

2. Verfahren nach Anspruch 1,
**dadurch gekennzeichnet,**
**dass** in der Sudhausanlage (01) zumindest ein Heißwassertank (10) vorhanden ist, in dem Wasser (09) zur Wärmeversorgung unterschiedlicher Wärmeverbraucher bei einer Heißwasserspeichertemperatur gespeichert werden kann, wobei das Wasser (09) in der Würzevorheizeinrichtung (03) von der Zwischentemperatur auf die Heißwasserspeichertemperatur abgekühlt und in den Heißwassertank (10) eingeleitet wird.

3. Verfahren nach Anspruch 1 oder 2,
**dadurch gekennzeichnet,**
**dass** das Wasser (09) im Würzekühler (08) mit einer Temperaturspreizung im Bereich von 88 K bis 95 K erhitzt wird.

4. Verfahren nach einem der Ansprüche 1 bis 3,
**dadurch gekennzeichnet,**
**dass** die Würze (02) im Würzekühler (08) mit einer Temperaturspreizung im Bereich von 80 K bis 95 K abgekühlt wird.

5. Verfahren nach Anspruch 4,
**dadurch gekennzeichnet,**
**dass** die Würze (02) im Würzekühler (08) von einer Heißwürzetemperatur im Bereich zwischen 95 °C und 99 °C auf eine Anstelltemperatur im Bereich zwischen 5 °C und 20 °C, insbesondere auf eine Anstelltemperatur zwischen 10 °C und 15 °C, abgekühlt wird.

6. Verfahren nach einem der Ansprüche 1 bis 5,
**dadurch gekennzeichnet,**
**dass** das Massenverhältnis zwischen der den Würzekühler (08) durchströmenden Würze (02) und dem den Würzekühler (08) durchströmenden Wasser (09) im Bereich zwischen 0,9 und 1,1 liegt.

7. Verfahren nach einem der Ansprüche 1 bis 6,
**dadurch gekennzeichnet,**
**dass** die Würze (02) in der kontinuierlich arbeitenden Würzevorheizeinrichtung (03) um eine Temperatur im Bereich von 10 K bis 25 K erwärmt wird.

8. Verfahren nach Anspruch 7,
**dadurch gekennzeichnet,**
**dass** die Würze (02) in der kontinuierlich arbeitenden Würzevorheizeinrichtung (03) auf eine Temperatur über 85 °C, insbesondere auf eine Temperatur über 91 °C, erwärmt wird.

9. Sudhausanlage (01) zur kontinuierlichen Würzeherstellung mit einer kontinuierlich arbeitenden Würzekocheinrichtung (04) und mit einem kontinuierlich arbeitenden Würzekühler (08), mit dem die Würze (02) nach der Würzekochung und vor der Zugabe von Hefe von einer Heißwürzetemperatur auf die gewünschte Anstelltemperatur abgekühlt werden kann, wobei der Würzekühler (08) in der Art eines Wärmeübertragers ausgebildet ist, mit dem die Würze (02) im Gegenstrom mit Wasser (09) gekühlt werden kann,
**dadurch gekennzeichnet,**
**dass** das Wasser (09) im Würzekühler (08) durch Wärmeübertragung kontinuierlich von einer Kaltwassertemperatur im Bereich zwischen 2 °C und 6 °C auf eine Zwischentemperatur im Bereich zwischen 90 °C und 96 °C erhitzt wird ,
wobei der Würzekühler (08) mit einer kontinuierlich arbeitenden Würzevorheizeinrichtung (03) verbunden ist, um das im Würzekühler (08) erwärmte Wasser (09) unmittelbar als Wärmeträger in die Würzevorheizeinrichtung (03) einzuleiten, und wobei die Temperatur der Würze (02) in der kontinuierlich arbeitenden Würzevorheizeinrichtung (03) durch Wärmeübertragung angehoben wird, und wobei das Wasser (09) in der kontinuierlich arbeitenden Würzevorheizeinrichtung (03) von der im Würzekühler (08) erreichten Zwischentemperatur im Bereich zwischen 90 °C und 96 °C auf eine Heißwasserspeichertemperatur im Bereich zwischen 75 °C und 85 °C heruntergekühlt wird.

10. Sudhausanlage nach Anspruch 9,
**dadurch gekennzeichnet,**
**dass** in der Sudhausanlage (01) zumindest ein Heißwassertank (10) vorhanden ist, in dem Wasser (09) zur Wärmeversorgung unterschiedlicher Wärmeverbraucher bei einer Heißwasserspeichertemperatur gespeichert werden kann, wobei die Würzevorheizeinrichtung (03) mit dem Heißwassertank (10) verbunden ist, um das in der Würzevorheizeinrichtung (03) abgekühlte Wasser (09) in den Heißwassertank (10) einleiten zu können.

11. Sudhausanlage nach Anspruch 9 oder 10,
**dadurch gekennzeichnet,**
**dass** der Würzekühler (08) in der Art eines kontinuierlich arbeitenden Plattenwärmeübertragers, insbesondere in der Art eines einstufigen Plattenwärmeübertragers, ausgebildet ist.

12. Sudhausanlage nach einem der Ansprüche 9 bis 11,
**dadurch gekennzeichnet,**
**dass** die Würzevorheizeinrichtung (03) in der Art eines kontinuierlich arbeitenden Plattenwärmeübertragers, insbesondere in der Art eines einstufigen Plattenwärmeübertragers, ausgebildet ist.

13. Sudhausanlage nach einem der Ansprüche 9 bis 12,
**dadurch gekennzeichnet,**
**dass** zwischen der Würzekocheinrichtung (04) einerseits und dem Würzekühler (08) anderseits eine kontinuierlich arbeitende Vorrichtung (06) zur Abtrennung von unerwünschten Aromastoffen, insbesondere eine im Gegenstrom arbeitende Strippingvorrichtung, vorgesehen ist.

14. Sudhausanlage nach einem der Ansprüche 9 bis 13,
**dadurch gekennzeichnet,**
**dass** zwischen der Würzekocheinrichtung (04) einerseits und dem Würzekühler (08) anderseits eine kontinuierlich arbeitende Vorrichtung (07) zur Abtrennung von Heißtrub vorgesehen ist.

## Claims

1. A method for a continuous wort production in a brewhouse plant (01), the wort (02) of the wort boiling process being cooled from a hot wort temperature to the desired pitching temperature by means of a continuously operating wort cooler (08) in a continuously operating wort boiling device (04) and before yeast is added, the wort cooler (08) being realised in the manner of a heat transfer means which cools the wort (02) with water (09) in the counter current, the water (09) being heated in the wort cooler (08) from a cold water temperature,
**characterised in that**
the water (09) in the wort cooler (08) is continuously heated from a cold water temperature in the range between 2°C and 6°C to an intermediate temperature in the range between 90°C and 96°C, the water (09) having the intermediate temperature in the range between 90°C and 96°C subsequently being immediately fed as heat carrier into a continuously operating wort preheating device (03) upstream of the wort boiling device (04), and the temperature of the wort (02) in the wort preheating device (03) being raised by heat transfer, and the water (09) in the continuously operating wort preheating device (03) being cooled down from the intermediate temperature reached in the wort cooler (08) in the range between 90°C and 96°C to a hot water storage temperature in the range between 75°C and 85°C.

2. The method according to claim 1,
**characterised in that**
at least one hot water tank (10) is present in the brewhouse plant (01), in which water (09) is stored at a hot water storage temperature for supplying heat to different heat consumers, the water (09) in the wort preheating device (03) being cooled from the intermediate temperature to the hot water storage temperature and being fed into the hot water tank (10).

3. The method according to claim 1 or 2,
**characterised in that**
the water (09) in the wort cooler (08) is heated with a temperature spread in the range of 88 K to 95 K.

4. The method according to any one of claims 1 to 3,
**characterised in that**
the wort (02) in the wort cooler (08) is cooled with a temperature spread in the range of 80 K to 95 K.

5. The method according to claim 4,
**characterised in that**
the wort (02) in the wort cooler (08) is cooled from a hot wort temperature in the range between 95°C and 99°C to a pitching temperature in the range between 5°C and 20°C, in particular to a pitching temperature between 10°C and 15°C.

6. The method according to any one of claims 1 to 5,
**characterised in that**
the mass ratio between the wort (02) flowing through the wort cooler (08) and the water (09) flowing through the wort cooler (08) is in the range between 0.9 and 1.1.

7. The method according to any one of claims 1 to 6,
**characterised in that**
the wort (02) in the continuously operating wort preheating device (03) is heated by a temperature in the range of 10 K to 25 K.

8. The method according to claim 7,
**characterised in that**
the wort (02) in the continuously operating wort preheating device (03) is heated to a temperature above 85°C, in particular to a temperature above 91°C.

9. A brewhouse plant (01) for a continuous wort production having a continuously operating wort boiling device (04) and a continuously operating wort cooler (08) by means of which, after the wort is boiled and before yeast is added, the wort (02) is cooled from a hot wort temperature to the desired pitching temperature, the wort cooler (08) being realised in the manner of a heat transfer means which cools the wort (02) with water (09) in the counter current,
**characterised in that**
the water (09) in the wort cooler (08) is continuously heated by means of heat transfer from a cold water temperature in the range between 2°C and 6°C to an intermediate temperature in the range between 90°C and 96°C,
the wort cooler (08) being connected to a continuously operating wort preheating device (03) in order to feed the water (09) heated in the wort cooler (08) immediately as heat carrier into the wort preheating device (03), and the temperature of the wort (02) in the continuously operating wort preheating device (03) being raised by means of heat transfer,
and the water (09) in the continuously operating wort preheating device (03) being cooled down from the intermediate temperature reached in the wort cooler (08) in the range between 90°C and 96°C to a hot water storage temperature in the range between 75°C and 85°C.

10. The brewhouse plant according to claim 9,
**characterised in that**
at least one hot water tank (10) is present in the brewhouse plant (01), in which water (09) is stored at a hot water storage temperature for supplying heat to different heat consumers, the wort preheating device (03) being connected to the hot water tank (10) in order to feed the water (09) cooled in the wort preheating device (03) into the hot water tank (10).

11. The brewhouse plant according to claim 9 or 10,
**characterised in that**
the wort cooler (08) is realised in the manner of a continuously operating plate heat transfer means, in particular in the manner of a single-stage plate heat transfer means.

12. The brewhouse plant according to any one of claims 9 to 11,
**characterised in that**
the wort preheating device (03) is realised in the manner of a continuously operating plate heat transfer means, in particular in the manner of a single-stage plate heat transfer means.

13. The brewhouse plant according to any one of claims 9 to 12,
**characterised in that**
a continuously operating device (06) for separating undesirable aroma substances, in particular a stripping device operating in the counter current, is provided between the wort boiling device (04) on the one hand and the wort cooler (08) on the other hand.

14. The brewhouse plant according to any one of claims 9 to 13,
**characterised in that**
a continuously operating device (07) for separating hot trub is provided between the wort boiling device (04) on the one hand and the wort cooler (08) on the other hand.

## Revendications

1. Procédé pour la production en continu de moût dans une installation de brassage (01), le moût (02) de l'ébullition du moût étant refroidi à partir d'une température de moût chaud à la température d'ensemencement souhaitée au moyen d'un refroidisseur de moût (08) fonctionnant en continu dans un dispositif d'ébullition de moût (04) et avant que de la levure soit ajoutée, le refroidisseur de moût (08) étant réalisé à la manière d'un échangeur de chaleur au moyen duquel le moût (02) est refroidi par de l'eau (09) à contre-courant, l'eau (09) étant chauffée dans le refroidisseur de moût (08) à partir d'une température d'eau froide,
**caractérisé en ce que**
l'eau (09) dans le refroidisseur de moût (08) est chauffée en continu à partir d'une température d'eau froide comprise entre 2°C et 6°C à une température intermédiaire comprise entre 90°C et 96°C, l'eau (09) ayant la température intermédiaire comprise entre 90°C et 96°C étant ensuite immédiatement introduite comme caloporteur dans un dispositif de préchauffage de moût (03) fonctionnant en continu et étant disposé en amont du dispositif d'ébullition de moût (04), et la température du moût (02) étant augmentée dans le dispositif de préchauffage de moût (03) par le transfert thermique, et l'eau (09) dans le dispositif de préchauffage de moût (03) fonctionnant en continu étant refroidie à partir de la température intermédiaire qui est atteinte dans le refroidisseur de moût (08) et est comprise entre 90° et 96°C à une température de stockage d'eau chaude comprise entre 75°C et 85°C.

2. Procédé selon la revendication 1,
**caractérisé en ce qu'**
au moins un réservoir d'eau chaude (10) est présent dans l'installation de brassage (01), dans lequel de l'eau (09) est stockée à une température de stockage d'eau chaude pour fournir de la chaleur à des consommateurs de chaleur différents, l'eau (09) dans le dispositif de préchauffage de moût (03) étant refroidie à partir de la température intermédiaire à la température de stockage d'eau chaude et étant introduite dans le réservoir d'eau chaude (10).

3. Procédé selon la revendication 1 ou 2,
**caractérisé en ce que**
l'eau (09) dans le refroidisseur de moût (08) est chauffée avec un écart de température dans la plage allant de 88 K à 95 K.

4. Procédé selon l'une quelconque des revendications 1 á 3,
**caractérisé en ce que**
le moût (02) dans le refroidisseur de moût (08) est refroidi avec un écart de température dans la plage allant de 80 K à 95 K.

5. Procédé selon la revendication 4,
**caractérisé en ce que**
le moût (02) dans le refroidisseur de moût (08) est refroidi à partir d'une température de moût chaud comprise entre 95°C et 99°C à une température d'ensemencement comprise entre 5°C et 20°C, notamment à une température d'ensemencement comprise entre 10°C et 15°C.

6. Procédé selon l'une quelconque des revendications 1 á 5,
**caractérisé en ce que**
le rapport massique entre le moût (02) s'écoulant à travers le refroidisseur de moût (08) et l'eau (09) s'écoulant à travers le refroidisseur de moût (08) est compris entre 0,9 et 1,1.

7. Procédé selon l'une quelconque des revendications 1 á 6,
**caractérisé en ce que**
le moût (02) dans le dispositif de préchauffage de moût (03) fonctionnant en continu est chauffé par une température dans la plage allant de 10 K à 25 K.

8. Procédé selon la revendication 7,
**caractérisé en ce que**
le moût (02) dans le dispositif de préchauffage de moût (03) fonctionnant en continu est chauffé à une température supérieure à 85°C, notamment à une température supérieure à 91°C.

9. Installation de brassage (01) pour la production en continu de moût ayant un dispositif d'ébullition de moût (04) fonctionnant en continu et un refroidisseur de moût (08) fonctionnant en continu et au moyen duquel, après l'ébullition du moût et avant que de la levure soit ajoutée, le moût (02) est refroidi à partir d'une température de moût chaud à la température d'ensemencement souhaitée, le refroidisseur de moût (08) étant réalisé à la manière d'un échangeur de chaleur au moyen duquel le moût (02) est refroidi par de l'eau (09) à contre-courant,
**caractérisée en ce que**
l'eau (09) dans le refroidisseur de moût (08) est chauffée en continu par le transfert thermique à partir d'une température d'eau froide comprise entre 2°C et 6°C à une température intermédiaire comprise entre 90°C et 96°C,
le refroidisseur de moût (08) étant connecté à un dispositif de préchauffage de moût (03) fonctionnant en continu pour introduire l'eau (09) chauffée dans le refroidisseur de moût (08) immédiatement comme caloporteur dans le dispositif de préchauffage de moût (03), et la température du moût (02) dans le dispositif de préchauffage de moût (03) fonctionnant en continu étant augmentée par le transfert thermique,
et l'eau (09) dans le dispositif de préchauffage de moût (03) fonctionnant en continu étant refroidie à partir de la température intermédiaire qui est atteinte dans le refroidisseur de moût (08) et est comprise entre 90°C et 96°C à une température de stockage d'eau chaude comprise entre 75°C et 85°C.

10. Installation de brassage selon la revendication 9,
**caractérisée en ce qu'**
au moins un réservoir d'eau chaude (10) est présent dans l'installation de brassage (01), dans lequel de l'eau (09) est stockée à une température de stockage d'eau chaude pour fournir de la chaleur à des consommateurs de chaleur différents, le dispositif de préchauffage de moût (03) étant connecté au réservoir d'eau chaude (10) pour introduire l'eau (09) refroidie dans le dispositif de préchauffage de moût (03) dans le réservoir d'eau chaude (10).

11. Installation de brassage selon la revendication 9 ou 10,
**caractérisée en ce que**
le refroidisseur de moût (08) est réalisé à la manière d'un échangeur de chaleur à plaques fonctionnant en continu, notamment à la manière d'un échangeur de chaleur à plaques à un étage.

12. Installation de brassage selon l'une quelconque des revendications 9 à 11,
**caractérisée en ce que**
le dispositif de préchauffage de moût (03) est réalisé à la manière d'un échangeur de chaleur à plaques fonctionnant en continu, notamment à la manière d'un échangeur de chaleur à plaques à un étage.

13. Installation de brassage selon l'une quelconque des revendications 9 à 12,
**caractérisée en ce qu'**
un dispositif (06) pour la séparation de substances aromatiques indésirables fonctionnant en continu, notamment un dispositif de stripage fonctionnant à contre-courant, est prévu entre le dispositif d'ébullition de moût (04) d'une part et le refroidisseur de moût (08) d'autre part.

14. Installation de brassage selon l'une quelconque des revendications 9 à 13,
**caractérisée en ce qu'**
un dispositif (07) pour la séparation de la lie chaude fonctionnant en continu est prévu entre le dispositif d'ébullition du moût (04) d'une part et le refroidisseur de moût (08) d'autre part.
